(19) Europäisches Patentamt
European Patent Office
Office européen des brevets

(11) Veröffentlichungsnummer: **0 027 240**
**A1**

(12) # EUROPÄISCHE PATENTANMELDUNG

(21) Anmeldenummer: 80106068.2

(22) Anmeldetag: 07.10.80

(51) Int. Cl.$^3$: C 09 J 3/16
C 08 L 83/04, C 03 C 27/10
C 04 B 37/00

(30) Priorität: 09.10.79 DE 2940917

(43) Veröffentlichungstag der Anmeldung:
22.04.81 Patentblatt 81/16

(84) Benannte Vertragsstaaten:
AT BE CH DE FR GB IT LI NL SE

(71) Anmelder: WACKER-CHEMIE GMBH
Prinzregentenstrasse 22
D-8000 München 22(DE)

(72) Erfinder: Louis, Eckhart, Dr. Dipl.-Chem.
Angererweg 20
D-8263 Burghausen(DE)

(72) Erfinder: Aigner, Ernst
Watzmannstrasse 21
D-8261 Tyrlaching(DE)

(72) Erfinder: Hechtl, Wolfgang, Dr. Dipl.-Chem.
Robert-Koch-Strasse 53
D-8263 Burghausen(DE)

(54) **Klebstoffe.**

(57) Erfindungsgemäß werden Massen, die als wesentliche Bestandteile Organosiloxane bzw. im wesentlichen lineare Organopolysiloxane mit SiC-gebundenen Vinylgruppen und Si-gebundenem Wasserstoff sowie die Anlagerung von Si-gebundenem Wasserstoff an Vinylgruppen fördernden Katalysator enthalten, wobei alle Organosiloxane bzw. Organopolysiloxane in diesen Massen frei von Sigebundenen Hydroxyl- oder Alkoxygruppen sind und durchschnittlich 2 bis 1000 Siliciumatome je Molekül enthalten, mindestens 99,5 %, vorzugsweise 99,9 % der Anzahl der Si-gebundenen Wasserstoffatome in Organosiloxanen bzw. Organopolysiloxanen mit einem Si-gebundenen Wasserstoffatom und einer SiC-gebundenen Vinylgruppe je Molekül oder mit 2 Si-gebundenen Wasserstoffatomen je Molekül und mindestens 99,5 %, vorzugsweise mindestens 99,9 % der Anzahl der SiC-gebundenen Vinylgruppen in Organosiloxan mit einem Si-gebundenen Wasserstoffatom und einer SiC-gebundenen Vinylgruppe je Molekül oder mit 2 SiC-gebundenen Vinylgruppen je Molekül vorliegen, als Klebstoffe für mindestens zwei miteinander zu verbindende, ungrundierte Unterlagen, insbesondere für die Verklebung von Schichten von miteinander bei der Herstellung von Verbundglas oder für die Verklebung von Silicium-Halbleiterelementen mit damit zu verbindenden Unterlagen bei der Herstellung von Solarzellen verwendet.

EP 0 027 240 A1

W A C K E R - C H E M I E
G M B H

München, den. 6.6.1979
LC-Pat/Dr.Ru/ fö

Wa 7913

## Klebstoffe

Beispielsweise aus US 40 51 454 (M. Leiser et al., Wacker-Chemie GmbH, ausgegeben 27. Sept. 1977, wobei dieser Patentschrift FR-PS 22 18 373 entspricht) sind bereits Klebstoffe bekannt, die als Massen bezeichnet werden können, die als wesentliche Bestandteile im wesentlichen lineare Organopolysiloxane mit SiC-gebundenen Vinylgruppen und Si-gebundenem Wasserstoff sowie die Anlagerung von Si-gebundenem Wasserstoff an Vinylgruppen fördernden Katalysator enthalten, wobei im Unterschied zu DT-OS 19 40 124 (General Electric Company, offengelegt 12. Feb. 1970, wobei dieser Offenlegungsschrift FR-AS 20 16 914 entspricht) die Vinylgruppen ausschließlich in Vinylmethylsiloxan-Einheiten und gegebenenfalls in Triorganosiloxygruppen vorliegen. US 40 51 454 nennt als Si-gebundenen Wasserstoff enthaltende Organopolysiloxane ausschließlich solche mit mindestens 3 Si-gebundenen Wasserstoffatomen je Molekül.

Im Unterschied zu DT-OS 19 40 124 sind alle Organoplysiloxane in den erfindungsgemäß als Klebstoffe verwendeten Massen frei von Si-gebundenen Hydroxyl- oder Alkoxygruppen. Von den aus US 40 51 454 bekannten Klebstoffen unterscheiden sich die erfindungsgemäßen Klebstoffe vorteilhafterweise z.B. dadurch, daß sie viel niedriger viskose Organosiliciumverbindungen enthalten. Sie können somit ohne Mitverwendung von Lösungsmittel auf die zu verklebenden Unterlagen aufgebracht werden. Dies bedeutet geringere Belastung der Umwelt und erweitert die Anzahl

BAD ORIGINAL

der Anwendungsmöglichkeiten, ermöglicht insbesondere eine einfache Herstellung von glasklaren Verbundstoffen sowie das Kleben bzw. Abdecken von Solarzellen. Aus den erfindungsgemäß verwendeten Massen erzeugte Klebschichten haften überraschenderweise auf den Unterlagen ausgezeichnet, auch wenn diese Klebschichten keine oder weniger Vernetzungsstellen als Klebschichten aus bekannten Klebstoffen enthalten.

Gegenstand der Erfindung ist die Verwendung von Massen, die als wesentliche Bestandteile Organosiloxane bzw. im wesentlichen lineare Organopolysiloxane mit SiC-gebundenen Vinylgruppen und Si-gebundenem Wasserstoff sowie die Anlagerung von Si-gebundenem Wasserstoff an Vinylgruppen fördernden Katalysator enthalten, als Klebstoffe für mindestens zwei miteinander zu verbindende ungrundierte Unterlagen, wobei alle Organosiloxane bzw. Organopolysiloxane in diesen Massen frei von Si-gebundenen Hydroxyl- oder Alkoxygruppen sind, dadurch gekennzeichnet,

daß alle Organosiloxane bzw. Organopolysiloxane in diesen Massen durchschnittlich 2 bis 1000 Siliciumatome je Molekül enthalten und
daß mindestens 99,5 % der Anzahl der Si-gebundenen Wasserstoffatome in Organosiloxanen bzw. Organopolysiloxanen mit einem Si-gebundenen Wasserstoffatom und einer SiC-gebundenen Vinylgruppe je Molekül oder mit 2 Si-gebundenen Wasserstoffatomen je Molekül vorliegen sowie
daß mindestens 99,5 % der Anzahl der SiC-gebundenen Vinylgruppen in Organosiloxanen bzw. Organopolysiloxanen mit einem Si-gebundenen Wasserstoffatom und einer SiC-gebundenen Vinylgruppe je Molekül oder mit 2 SiC-gebundenen Vinylgruppen je Molekül vorliegen.

Bei den Organosiloxanen bzw. im wesentlichen linearen Organopolysiloxanen mit SiC-gebundenen Vinylgruppen und Organosiloxanen bzw. im wesentlichen linearen Organopolysiloxanen, in denen mindestens 99,5 %, vorzugsweise mindestens 99,9 %, der Anzahl der Si-gebundenen Wasserstoffatome und mindestens 99,5 %,

vorzugsweise mindestens 99,9 % der Anzahl der Si-gebundenen Vinylgruppen bei den erfindungsgemäß verwendeten Massen vorliegen, kann es sich um eine Art von Molekülen hinsichtlich der Art der in ihnen vorhandenen Organosiloxaneinheiten handeln. Ein Beispiel dafür sind Verbindungen der Formel

$$CH_2 = CH(CH_3)_2SiO\left[Si(CH_3)_2O\right]_nSi(CH_3)_2H,$$

wobei n O oder eine ganze Zahl im Wert von 1 bis 998 ist. Bei diesen Organosiloxanen bzw. im wesentlichen linearen Organopolysiloxanen mit SiC-gebundenen Vinylgruppen und Organosiloxanen bzw. im wesentlichen linearen Organopolysiloxanen mit Si-gebundenem Wasserstoff kann es sich aber auch um ein Gemisch aus mindestens zwei hinsichtlich der Art der in ihnen vorhandenen Organosiloxaneinheiten verschiedenen Arten von Molekülen handeln. Ein Beispiel für ein solches Gemisch ist ein Gemisch aus Verbindungen der Formel

$$CH_2 = CH(CH_3)_2SiO\left[Si(CH_3)_2O\right]_nSi(CH_3)_2CH = CH_2$$

und aus Verbindungen der Formel

$$H(CH_3)_2SiO\ [Si(CH_3)_2O]_nSi(CH_3)_2H,$$

wobei n jeweils die oben dafür angegebene Bedeutung hat.

Ganz allgemein können in den erfindungsgemäß verwendeten Massen Organosiloxane bzw. im wesentlichen lineare Organopolysiloxane insbesondere folgender allgemeiner Formeln vorliegen:

$$CH_2 = CHR_2Si(OSiR_2)_nOSiR_2CH = CH_2, \quad (1)$$

$$(CH_2= CH)_2RSi(OSiR_2)_nOSiR_3, \quad (2)$$

$$CH_2 = CHR_2Si(OSiR_2)_nOSiR_2H, \quad (3)$$

$$HR_2Si(OSiR_2)_nOSiR_2H, \quad (4)$$

$$R_3Si(OSiR_2O)_{n'}\left[Si(CH_3)HO\right]_2SiR_3 \quad (5)$$

$$R_3Si(OSiR_2O)_{n'}\left[Si\ CH{=}CH_2(CH_3)O\right]_2SiR_3 \quad (6)$$

In diesen Formeln bedeutet R jeweils gleiche oder verschiedene, einwertige Kohlenwasserstoffreste, die von aliphatischen Mehrfachbindungen frei sind, n hat jeweils die oben dafür angegebene Bedeutung und n' ist jeweils 0 oder eine ganze Zahl im Wert von 1 bis 996.

Es ist bevorzugt, daß durchschnittlich 0,5 bis 2 Si-gebundene Wasserstoffatome je SiC-gebundener Vinylgruppe vorliegen.

Die Kohlenwasserstoffreste R haben vorzugsweise 1 bis 8-Kohlenstoffatome je Rest. Beispiele für Kohlenwasserstoffreste R sind Alkylreste, wie der Methyl-, Äthyl-, n-Propyl- und Isopropylrest sowie Octylreste, Arylreste, wie der Phenylrest, Aralkylreste, wie der Benzylrest, und Alkarylreste, wie der Tolylrest. Insbesondere wegen der leichteren Zugänglichkeit sind jedoch vorzugsweise mindestens 80 % der Anzahl der anderen organischen Reste als Vinylreste in den Organosiloxanen bzw. Organopolysiloxanen der erfindungsgemäß verwendeten Massen Methylreste.

Als die Anlagerung von Si-gebundenem Wasserstoff an Vinylgruppen fördernde Katalysatoren können auch im Rahmen der Erfindung alle Katalysatoren verwendet werden, mit denen auch sonst die Anlagerung von Si-gebundenem Wasserstoff an Vinylgruppen gefördert werden kann. Beispiele für solche Katalysatoren sind metallisches und feinverteiltes Platin, Ruthenium, Rhodium, Palladium und Iridium, wobei sich diese Metalle jeweils auf festen Trägern, wie Siliciumdioxyd, Aluminiumoxyd oder Aktivkohle, befinden können, und Verbindungen oder Komplexe dieser Elemente, wie $PtCl_4$, $H_2PtCl_6 \cdot 6H_2O$, $Na_2PtCl_4 \cdot 4H_2O$, Platin-Olefin-Komplexe, Platin-Alkohol- oder Platin-Alkoholat-Komplexe, Platin-Äther-Komplexe, Platin-Aldehyd-Komplexe, Platin-Keton-Komplexe,

Platin-Vinylsiloxan-Komplexe, insbesondere Platin-Divinyltetramethyldisiloxan-Komplexe mit oder ohne Gehalt an nachweisbarem anorganisch gebundenem Halogen, Bis-(gamma-picolin)-platindichlorid, Trimethylenpyridin-platindichlorid, ferner Eisen-, Nickel- und Kobaltcarbonyle.

Wird als die Anlagerung von Si-gebundenem Wasserstoff an Vinylgruppen fördernder Katalysator Platin, Ruthenium, Rhodium oder Iridium oder ein Gemisch aus mindestens zwei dieser Elemente oder mindestens eine Verbindung dieser Elemente und/oder mindestens ein Komplex dieser Elemente eingesetzt, so werden diese Katalysatoren vorzugsweise in Mengen von 5 bis 500 ppm (Gewichtsteilen je Million Gewichtsteilen), berechnet als Edelmetallelement und bezogen auf das Gesamtgewicht der jeweiligen Masse, verwendet.

Zusätzlich zu Organosiloxanen bzw. im wesentlichen linearen Organopolysiloxanen der oben angegebenen Formeln können die erfindungsgemäß verwendeten Massen als Organosiloxane bzw. Organopolysiloxane, um eine besonders hohe Festigkeit der Verklebung zu erzielen, gegebenenfalls weiterhin Organosiloxane oder lineare oder verzweigte Organopolysiloxane mit insgesamt mindestens 3 Si-gebundenen Wasserstoffatomen und/oder SiC-gebundenen Vinylgruppen je Molekül enthalten, natürlich mit der Maßgabe,daß mindestens 99,5%,vorzugsweise mindestens 99,9% der Anzahl aller Si-gebundenen Wasserstoffatome in Organosiloxanen bzw. linearen Organopolysiloxanen mit einem Si-gebundenem Wasserstoffatom und einer Si-gebundenen Vinylgruppe je Molekül oder mit 2 Si-gebundenen Wasserstoffatomen je Molekül, mindestens 99,5 %, vorzugsweise mindestens 99,9 % der Anzahl der SiC-gebundenen Vinylgruppen in Organosiloxanen bzw. Organopolysiloxanen mit einem Si-gebundenen Wasserstoffatom und einer SiC-gebundenen Vinylgruppe oder mit 2 SiC-gebundenen Vinylgruppen je Molekül vorliegen und diese Organosiloxane bzw. Organopolysiloxane frei von Si-gebundenen Hydroxyl- oder Alkoxygruppen sind.

Somit kann beispielsweise bei einigen Organopolysiloxanen der oben angegebenen Formeln (1) bis (6) mindestens eine $R_2SiO$-Einheit durch eine $CH_2 = CHRSiO$-Einheit und/oder z.B. $Si(CH_3)HO$-Einheit ersetzt sein.

Zusätzlich zu Organosiloxanen bzw. Organopolysiloxanen mit SiC-gebundenen Vinylgruppen und Si-gebundenem Wasserstoff und die Anlagerung von Si-gebundenem Wasserstoff an Vinylgruppen förderndem Katalysator können die erfindungsgemäß verwendeten Massen gegebenenfalls weitere Bestandteile, die in Massen auf Grundlage von Organopolysiloxanen mit SiC-gebundenen Vinylgruppen und Organopolysiloxanen mit Si-gebundenem Wasserstoff an Vinylgruppen förderndem Katalysator vorliegen können, enthalten. Beispiele für solche weiteren Bestandteile sind insbesondere verstärkende Füllstoffe, bei Raumtemperatur die Anlagerung von Si-gebundenem Wasserstoff an Vinylgruppen verhindernde bzw. verzögernde Mittel, nichtverstärkende Füllstoffe, flammabweisend machende Mittel, Pigmente, lösliche Farbstoffe und Weichmacher, wie flüssige durch Trimethylsiloxygruppen endblockierte Dimethylpolysiloxane, sowie Photosensibilisatoren, wie Benzophenon, um die Anlagerung von Si-gebundenem Wasserstoff an die Vinylgruppen weiter zu beschleunigen.

Vorzugsweise werden jedoch bei vielen Anwendungszwecken die erfindungsgemäß verwendeten Massen als sogenannte Zweikomponentensysteme eingesetzt, wobei sie dann keine die Anlagerung von Si-gebundenem Wasserstoff an Vinylgruppen verzögernde Mittel enthalten müssen.

Wenn die erfindungsgemäß verwendeten Massen Füllstoffe, insbesondere verstärkende Füllstoffe, wie pyrogen erzeugtes Siliciumdioxyd enthalten, so können diese Füllstoffe in bekannter Weise an ihrer Oberfläche Organosilylgruppen aufweisen.

Die durch Anlagerung von Si-gebundenem Wasserstoff an SiCgebundene Vinylgruppen in den erfindungsgemäß verwendeten Massen zwischen den zu verbindenden Unterlagen erzeugten Schichten haften ohne Grundierung der Unterlagen ausgezeichnet auf anorganischen festen Stoffen, wie Glas und Halbleiter-Silicium sowie Metallen, Organopolysiloxanelastomeren und rein-organischen Kunststoffen,wie Polycarbonaten und sogar Polyäthylen und Polytetrafluoräthylen.

Die durch Anlagerung von Si-gebundenem Wasserstoff an SiCgebundene Vinylgruppen in den erfindungsgemäß verwendeten Massen zwischen den zu verbindenden Unterlagen erzeugten Schichten sind hochtransparent, hitze- und lichtbeständig, ihre Bildung kann durch Erwärmen und/oder Ultraviolettbestrahlung beschleunigt werden und erfolgt ohne Schrumpfung der Schichten. Die Schichten sind auch innerhalb des Bereichs von -50° bis +200°C plastisch oder elastisch verformbar und schädigen keine Metalle oder Kunststoffe durch Korrosion, einschließlich Spannungskorrosion.

Die erfindungsgemäß verwendeten Massen sind bei geeigneter Wahl ihrer Bestandteile bei Verarbeitung und Anwendung physiologisch völlig unbedenklich.

Die erfindungsgemäß als Klebstoffe verwendeten Massen eignen sich beispielsweise und insbesondere für die Herstellung von Verbundglas, wie Panzerglas und anderem Verbundglas, z.B. solchem für Schalldämmung,durch Verkleben der Schichten z.B. aus Glasscheiben miteinander oder mit Kunststoffolien, wie Polycarbonatfolien, und für die Verklebung von Halbleiterelementen, insbesondere Silicium-Halbleiterelementen,mit damit zu verbindenden Unterlagen aus Glas oder Kunststoff z.B. bei der Herstellung von Solarzellen, ferner zum Befestigen medizinischer oder kosmetischer Geräte oder anderer Gegenstände auf natürlichem oder künstlichem Trägermaterial und zur Montage optischer oder photoelektrischer Geräte.

Im folgenden beziehen sich alle Angaben von Teilen und Prozentsätzen auf das Gewicht, soweit nichts anderes angegeben ist. Die Viskositäten wurden jeweils bei 25°C bestimmt.

Die in dem folgenden Beispiel verwendete Mischung aus Platin-Divinyltetramethyldisiloxan-Komplex und Verdünnungsmittel wurde hergestellt wie folgt:

Zu einer Mischung aus 10 Teilen $H_2PtCl_6 \cdot 6H_2O$, 20 Teilen 1,3-Divinyl-1,1,3,3-tetramethyldisiloxan und 50 Teilen Äthanol wurden 20 Teile Natriumbicarbonat gegeben. Das Gemisch wurde 30 Minuten unter Rühren zum Sieden unter Rückfluß erwärmt, dann 15 Stunden stehengelassen und schließlich filtriert. Aus dem Filtrat wurden bei 1596 Pa (abs.) die flüchtigen Bestandteile abdestilliert. Der Rückstand wurde in Benzol gelöst. Die Lösung wurde filtriert und aus dem Filtrat das Benzol abdestilliert. Der Rückstand wurde mit Vinyldimethylsiloxaneinheiten als endständige Einheiten aufweisendem Dimethylpolysiloxan mit einer Viskosität von 1 400 mPa . s als Verdünnungsmittel in solcher Menge vermischt, daß das Gemisch 1 % Platin, berechnet als Element, enthält.

## Beispiel 1

a) In einem Doppel-Z-Kneter werden bei 260 Pa (abs.) und 90° bis 100° C 1000 Teile eines in den endständigen Einheiten je eine Si-gebundene Hydroxylgruppe aufweisenden Dimethylpolysiloxans mit einer Viskosität von 1000 mPa·s mit 0,11 Teilen einer 25%-igen Lösung von durch Umsetzung von 2 Mol Phosphorpentachlorid mit 1 Mol Ammoniumchlorid erzeugten Phosphornitridchloriden in Methylenchlorid verknetet. Nach 5 Stunden Kneten bei 90° bis 100° C wird eine bei Raumtemperatur feste Masse erhalten. Diese Masse wird 3 Stunden bei 260 Pa auf 150°C erwärmt.

b) Nachdem das hochviskose Organopolysiloxan, dessen Herstellung vorstehend unter a) beschrieben wurde, auf 40°C abgekühlt ist, wird es in dem Kneter mit insgesamt 440 Teilen eines Gemisches aus gleichen Teilen eines Dimethylhydrogensiloxygruppen als endständige Einheiten aufweisenden Dimethylpolysiloxans mit durchschnittlich 100 Dimethylsiloxaneinheiten je Molekül und eines Dimethylvinylsiloxygruppen als endständige Einheiten aufweisenden Dimethylpolysiloxans mit durchschnittlich 100 Dimethylsiloxaneinheiten je Molekül in 4 Anteilen sowie mit insgesamt 0,35 Teilen der oben unter a) näher beschriebenen Lösung von Phosphornitridchloriden in 4 Anteilen vermischt. Nach 20 Stunden Kneten bei 40°C ändert sich die Viskosität der gekneteten Flüssigkeit nicht mehr. Es wird ein Dimethylpolysiloxan erhalten, das durchschnittlich ebenso viele endständige Dimethylhydrogensiloxygruppen wie endständige Dimethylvinylsiloxygruppen aufweist und nach Befreiung von flüchtigen Bestandteilen in einem Dünnschichtverdampfer eine Viskosität von etwa 2000 mPa . s hat.

c) Das Organopolysiloxan, dessen Herstellung vorstehend unter b) beschrieben wurde, wird mit 0,05 % der Mischung aus Platin-Divinyltetramethyldisiloxan-Komplex und Verdünnungsmittel vermischt und in Polypropylenschälchen gegossen. Dann werden sofort in die Schälchen Streifen aus Glas, Halbleiter-Silicium, Polycarbonat, Polytetrafluoräthylen, Polyäthylen und rostfreiem Stahl gelegt. Nach 24 Stunden bei Raumtemperatur und anschließend 2 Stunden bei 60°C ist eine zäh-plastische, stark klebende Masse entstanden. Bei dem Versuch, die eingelegten Streifen aus dieser Masse herauszuziehen, ist ausnahmslos Kohäsionsbruch in der Masse, in keinem Fall aber Adhäsionsbruch zwischen Masse und eingelegten Streifen zu beobachten.

Beispiel 2

a) 400 g des hochviskosen Organopolysiloxans, dessen Herstellung in Beispiel 1 unter a) beschrieben wurde, werden in dem Kneter mit insgesamt 7,4 g 1,3-Dihydrogen-1,1,3,3-tetramethyldisiloxan in 4 Anteilen sowie mit insgesamt 0,02 ml der in Beispiel 1 unter a) näher beschriebenen Lösung von Phosphornitridchloriden in 4 Anteilen vermischt. Nach 24 Stunden Kneten bei Raumtemperatur ändert sich die Viskosität der gekneteten Flüssigkeit nicht mehr. Es wird ein nach Befreiung von flüchtigen Bestandteilen in einem Dünnschichtverdampfer Dimethylhydrogensiloxygruppen als endständige Einheiten aufweisendes Dimethylpolysiloxan erhalten, das durchschnittlich 100 Dimethylsiloxaneinheiten je Molekül aufweist und 0,027 % Si-gebundene Wasserstoffatome hat.

b) Die vorstehend beschriebene Arbeitsweise wird wiederholt mit der Abänderung, daß an Stelle der 7,4 g 1,3-Dihydrogen-1,1,3,3-tetramethyldisiloxan 10,3 g 1,3-Divinyl-1,1,3,3-tetramethyldisiloxan eingesetzt werden. Es wird ein nach Befreiung von flüchtigen Bestandteilen in einem Dünnschichtverdampfer Dimethylvinylsiloxygruppen als endständige Einheiten aufweisendes Dimethylpolysiloxan erhalten, das durchschnittlich 100 Dimethylsiloxaneinheiten je Molekül aufweist und eine Jodzahl von 6,8 hat.

c) In ein Gemisch aus 1500 g des Dimethylhydrogensiloxygruppen als endständige Einheiten aufweisenden Dimethylpolysiloxans, dessen Herstellung in diesem Beispiel unter a) beschrieben wurde, und 1700 g des Dimethylvinylsiloxygruppen als endständige Einheiten aufweisenden Dimethylpolysiloxans, dessen Herstellung in diesem Beispiel unter b) beschrieben wurde, werden 12,3 g eines durch Trimethylsiloxygruppen endblockierten Organopolysiloxans aus 12,5 % Methylhydrogensiloxaneinheiten und 97,5 % Dimethylsiloxaneinheiten mit einer Viskosität von 7000 mPa·s und 50 ppm Platin in Form der Mischung

aus Platin-Divinyltetramethyldisiloxan-Komplex und Verdünnungsmittel eingemischt. Die so erhaltene Mischung wird in Polypropylenschälchen gegossen. Dann werden sofort in die Schälchen Streifen aus den in Beispiel 1 unter c) angegebenen festen Stoffen gelegt. Nach einer Topfzeit von etwa 3 Stunden bei Raumtemperatur, d.h. bis zum Beginn einer merklichen Viskositätserhöhung der Masse, und Stehen über Nacht bei Raumtemperatur, ist eine zähe Masse entstanden. Bei dem Versuch, die eingelegten Streifen aus dieser Masse herauszuziehen, ist ausnahmslos Kohäsionsbruch in der Masse, in keinem Fall aber Adhäsionsbruch zwischen Masse und eingelegten Streifen zu beobachten.

0027240

## Patentansprüche

1. Verwendung von Massen, die als wesentliche Bestandteile Organosiloxane bzw. im wesentlichen lineare Organopolysiloxane mit SiC-gebundenen Vinylgruppen und Si-gebundenem Wasserstoff sowie die Anlagerung von Si-gebundenem Wasserstoff an Vinylgruppen fördernden Katalysator enthalten, als Klebstoffe für mindestens zwei miteinander zu verbindende, ungrundierte Unterlagen, wobei alle Organosiloxane bzw. Organopolysiloxane in diesen Massen frei von Si-gebundenen Hydroxyl- oder Alkoxygruppen sind, d a d u r c h g e k e n n z e i c h n e t,
daß alle Organosiloxane bzw. Organopolysiloxane in diesen Massen durchschnittlich 2 bis 1000 Siliciumatome je Molekül enthalten
und daß mindestens 99,5 % der Anzahl der Si-gebundenen Wasserstoffatome in Organosiloxanen bzw. Organopolysiloxanen mit einem Si-gebundenen Wasserstoffatom und einer SiC-gebundenen Vinylgruppe je Molekül oder mit 2 Si-gebundenen Wasserstoffatomen je Molekül vorliegen sowie
daß mindestens 99,5 % der Anzahl der SiC-gebundenen Vinylgruppen in Organosiloxanen bzw. Organopolysiloxanen mit einem Si-gebundenen Wasserstoffatom einer SiC-gebundenen Vinylgruppe je Molekül oder mit 2 SiC-gebundenen Vinylgruppen je Molekül vorliegen.

2. Ausführungsform nach Anspruch 1, d a d u r c h g e k e n n z e i c h n e t, daß mindestens 99,9 % der Anzahl der Si-gebundenen Wasserstoffatome in Organosiloxanen bzw. Organopolysiloxanen mit einem Si-gebundenen Wasserstoffatom und einer SiC-gebundenen Vinylgruppe je Molekül oder mit 2 Si-gebundenen Wasserstoffatomen je Molekül vorliegen.

3. Ausführungsform nach Anspruch 1, d a d u r c h g e k e n n z e i c h n e t, daß mindestens 99,9 % der Anzahl der SiC-gebundenen Vinylgruppen in Organosiloxanen

bzw. Organopolysiloxanen mit einem Si-gebundenen Wasserstoffatom und einer SiC-gebundenen Vinylgruppe je Molekül oder mit 2 SiC-gebundenen Vinylgruppen je Molekül vorliegen.

4. Ausführungsform nach einem der Ansprüche 1, 2 oder 3, dadurch gekennzeichnet, daß die Massen zum Verkleben von Schichten miteinander bei der Herstellung von Verbundglas oder für die Verklebung von Silicium-Halbleiterelementen mit damit zu verbindenden Unterlagen bei der Herstellung von Solarzellen verwendet werden.

0027240

Nummer der Anmeldung

EP 80 10 6068

Europäisches Patentamt

# EUROPÄISCHER RECHERCHENBERICHT

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | EP - A - 0 003 044 (BAYER)<br>* Ansprüche 1,2,6; Seite 7, Zeilen 1-11 *<br>-- | 1 | C 09 J 3/16<br>C 08 L 83/04<br>C 03 C 27/10<br>C 04 B 37/00 |
| | GB - A - 1 020 827 (DOW CORNING)<br>* Ansprüche 1-3; Seite 4, Zeile 8 *<br>-- | 1 | |
| A | US - A - 4 130 707 (M. LEISER)<br>* Anspruch 1 *<br>-- | 1 | RECHERCHIERTE SACHGEBIETE (Int. Cl.³)<br>C 09 J 3/16<br>C 08 L 83/04<br>C 03 C 27/10<br>C 04 B 37/00 |
| A | FR - A - 2 307 860 (DOW CORNING)<br>* Anspruch 1 *<br>-- | 1 | |
| A | US - A - 3 595 934 (A.J. BUTLER)<br>* Anspruch 1 *<br>---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

✓ Der vorliegende Recherchenbericht wurde für alle Patentansprüche erstellt.

| Recherchenort | Abschlußdatum der Recherche | Prüfer |
|---|---|---|
| Den Haag | 27-01-1981 | DEPIJPER |